# EUROPÄISCHE PATENTSCHRIFT

(11) **EP 4 281 304 B1**
(45) Veröffentlichungstag und Bekanntmachung des Hinweises auf die Patenterteilung: **16.04.2025**
(21) Anmeldenummer: 22700799.4
(22) Anmeldetag: 17.01.2022
(51) Int. Cl.: B60J 10/00, B23P 19/04, B62D 65/06, B25B 27/00

(54) **APPLIKATIONSEINHEIT UND VERFAHREN ZUM ANBRINGEN EINES DICHTUNGSPROFILS**
APPLICATION UNIT AND METHOD FOR APPLYING A SEALING PROFILE
UNITÉ D'APPLICATION ET PROCÉDÉ D'APPLICATION D'UN PROFILÉ D'ÉTANCHÉITÉ

(30) Priorität: 20.01.2021 DE 102021200485
(43) Veröffentlichungstag der Anmeldung: 29.11.2023
(73) Patentinhaber: thyssenkrupp Automotive Body Solutions GmbH, 74076 Heilbronn (DE); thyssenkrupp AG, 45143 Essen (DE)
(72) Erfinder: LÖSCH, Alfred, 66636 Tholey (DE)
(74) Vertreter: thyssenkrupp Intellectual Property GmbH
(86) Internationale Anmeldenummer: PCT/EP2022/050864
(87) Internationale Veröffentlichungsnummer: WO 2022/157110

(56) Entgegenhaltungen:
- WO-A1-2015/106968
- WO-A1-2017/167871
- DE-C2- 3 941 376
- DE-U1- 202016 004 640

## Beschreibung

Die Erfindung betrifft eine Applikationseinheit zum Anbringen eines Dichtungsprofils auf ein dem Verschließen einer Karosserieöffnung dienenden Karosseriebauteil, mit einem Anrollkopf, in dem während einer Betriebssituation das Dichtungsprofil entlang eines zumindest einfach gekrümmten ersten Bahnverlaufs geführt wird.

Derartige Dichtungsprofile sind beispielsweise dafür vorgesehen, eine dichtende Verbindung zwischen einer Karosserieöffnung und der in ihr eingesetzten Abdeckung herzustellen. Bei so einer Abdeckung kann es sich beispielsweise um eine Tür, einen Kofferraumdeckel oder ein Schiebedachelement handeln. Im Folgenden soll exemplarisch auf eine Fahrzeugtür eingegangen werden, die in dem Stadium, in dem das Dichtungsprofil auf ihr angebracht wird, auch als Türzusammenbau bezeichnet werden kann.

Ein Dichtungsprofil besteht in der Regel aus einem sich in Längsrichtung ersteckenden Hohlprofilgummi, an dem in einem Umfangsbereich eine Lasche, der sogenannten Dichtungsfuß, ebenfalls in Längsrichtung verlaufend angebracht ist. Die Lasche ist derart in Umfangsrichtung ausgerichtet, dass sie im Wesentlichen außen an dem Hohlprofil anliegt, ggf. unter geringer Spaltbildung. Wiederum außen auf der Lasche ist in Längsrichtung ein Klebestreifen aufgebracht, der bis kurz vor der Applikation des Dichtungsprofils auf dem Türzusammenbau mit einem sogenannten Liner zum Schutz abgedeckt ist. Der Liner muss demnach in geeigneter Weise von dem Klebestreifen abgezogen werden.

Im Stand der Technik ist ein als "direktes Anrollen" bezeichnetes Verfahren zum Anbringen eines Dichtungsprofils auf einen Türzusammenbau bekannt. Hierbei wird das Dichtungsprofil von einer Endlosrolle mittels einer Fördereinrichtung gefördert und über einen Anrollkopf appliziert. Der Vorschub des Dichtungsprofils auf den Türzusammenbau wird entsprechend geregelt. Der Türzusammenbau an sich ist in einer bewegbaren Halterungsvorrichtung, beispielsweise über einen Industrieroboter, bewegbar aufgenommen und wird an dem ortsfesten Anrollkopf vorbeigeführt, der dabei das Dichtungsprofil auf dem Türzusammenbau appliziert. Sobald das Dichtungsprofil rings um den Türzusammenbau appliziert wurde, durchtrennt ein Schnittmesser das Dichtungsprofil, um es von der Endlosrolle abzulängen. Hiernach müssen beide Stoßenden derart einander angenähert werden, dass nach Möglichkeit ein quasi nahtloses, durchgängiges Dichtungsprofil entsteht. Nachteilig ist hier, dass die Endlosrolle Dichtungsprofil bis zu einer Gesamtlänge von 1500m bevorratet, wodurch deren Handhabung infolge der Größe gewisse Anforderungen stellt. Hierbei ist sowohl die reine Verpackung der Endlosrollen aufwändig als auch der eigentliche Transport zu dem Ort der Dichtungsapplikation, einschließlich der Installation der Endlosrolle in der Anlage. Infolge dieser sehr hohen Gesamtlänge des Dichtungsprofils auf einer Endlosrolle kann mit einer Endlosrolle eine Vielzahl von einzelnen Applikationsvorgängen durchgeführt werden, so dass ein Wechsel der Endlosrolle bezogen auf einen regulären Fertigungstakt nicht allzu häufig durchgeführt werden muss. Bei einem Wechsel der Endlosrollen, d.h. einen Austausch der leeren Endlosrolle gegen eine volle Endlosrolle, ist es erforderlich das Ende des gerade zu Ende gehenden Dichtungsprofils mit dem Anfang des Dichtungsprofils der vollen Endlosrolle zu verbinden. Dieser Vorgang wird regelmäßig an einem speziell dazu eingerichteten Arbeitsplatz manuell durchgeführt. Die Verbindung der beiden Dichtungsenden wird hierbei über eine Verklebung realisiert, wobei dieser Bereich der Verklebung den Zugkräften in der Fördereinrichtung und dem Anrollkopf Stand halten muss, allerdings nicht für eine Applikation auf dem Türzusammenbau vorgesehen ist, sondern vorher ausgesondert wird.

Ausgehend hiervon wäre es wünschenswert, auf den Einsatz von Endlosrollen mit den soeben beschrieben Vorratslängen an Dichtungsprofil verzichten zu können und stattdessen Magazinrollen mit deutlich kürzeren Vorratslängen, beispielsweise etwas 1/10 an Vorratslänge, einzusetzen. Bei diesen deutlich kleineren Magazinrollen kann eine einfachere Verpackung vorgesehen sein und weiterhin ist eine logistisch einfachere Handhabung möglich. Eine mögliche Applikationseinheit mit mehreren Magazinrollen zeigt die DE 20 2016 004 640 U1. Bekannt sind hier Lösungen mit spreizbaren Förderrollen bzw. Führungsrollen im Anrollkopf, so dass in diese gespreizten Rollen vorkonfektionierte Einzeldichtungsprofile automatisch eingelegt werden können. Der Dichtungsanfang der Einzelprofile wird hierbei mittels einer speziellen Vorrichtung manuell in eine Übernahmekontur gebracht. Die Profile inkl. Vorrichtung selbst befinden sich in einem Magazin, welche die Funktion eine Zwischenpuffers haben. Um auf diese Magazine verzichten zu können oder mehrere kleinere Dichtungsrollen, anstatt einer großen Endlosrolle, einzusetzen zu können, wäre ein automatisierter Wechsel der Dichtungsrollen inkl. Einfädeln in den Anrollkopf erforderlich.

Im Stand der Technik ist aus DE 39 41 376 C2 zudem eine Vorrichtung zum Applizieren eines Dichtungsprofils auf ein Karosseriebauteil bekannt, wobei das Dichtungsprofil in einem gekrümmten Verlauf auf das Karosseriebauteil aufgedrückt wird und das Dichtungsprofil dabei entgegen der Eigenelastizität festgehalten wird, um den gekrümmten Verlauf des Dichtungsprofils zu bilden.

Die Druckschrift DE 39 41 376 C2 offenbart eine Applikationseinheit und ein Verfahren nach dem Oberbegriff der Ansprüche 1 bzw. 10.

Eine weitere Vorrichtung zum Applizieren eines Dichtungsprofils wird in der WO 2015/106968 A1 beschrieben, in der vorgesehen ist, dass das Dichtungsprofil beim Heranführen an das Werkstück in einer als Dichtungspuffer fungierenden freien Schlaufe geführt wird.

Eine weitere Applikationsvorrichtung zum Aufbringen eines Dichtungsprofils auf ein Karosseriebauteil offenbart die WO 2017/167871 A1. Diese sieht vor, dass das Dichtungsprofil Positionsmarken umfasst und die Applikationsvorrichtung anhand der Positionsmarken das Dichtungsprofil für einen vorgegebenen Verlauf streckt oder staucht.

Ausgehend hiervon besteht die Aufgabe der vorliegenden Erfindung darin, eine Vorrichtung und ein Verfahren bereitzustellen, das ein automatisiertes Einsetzen eines neuen Dichtungsprofils in den Anrollkopf ermöglicht.

Die Aufgabe wird gelöst durch eine Applikationseinheit zum Anbringen eines Dichtungsprofils auf ein dem Verschließen einer Karosserieöffnung dienenden Karosseriebauteil, mit einem Anrollkopf, wobei in einem Inneren des Anrollkopfes während einer Betriebssituation das Dichtungsprofil entlang eines gekrümmten ersten Bahnverlaufs geführt wird, einer Ausrichtvorrichtung mit einer Mehrzahl an Ausrichtelementen, die zwischen einer geöffneten Stellung und einer angenäherten Stellung auf einem Grundrahmen der Ausrichtvorrichtung beweglich sind, wobei ein zwischen den Ausrichtelementen in der angenäherten Stellung geführtes Dichtungsprofil einen dem ersten Bahnverlauf während einer Betriebssituation des Anrollkopfes entsprechenden zweiten Bahnverlauf einnimmt und wobei der Anrollkopf (20) und/oder die Ausrichtvorrichtung (30) zueinander zwischen einer Ausgangsposition und einer Übergabeposition beweglich sind und der Anrollkopf (20) und die Ausrichtvorrichtung (30) in der Ausgangsposition beabstandet zueinander und in der Übergabeposition einander zumindest angenähert angeordnet sind.

Durch die erfindungsgemäße Applikationseinheit ist es möglich, den Anfangsabschnitt des Dichtungsprofils einer neuen Magazinrolle wiederholgenau zu positionieren bzw. positionsmäßig bereitzustellen. Über die Ausrichtvorrichtung der Applikationseinheit kann der Anfangsabschnitt des Dichtungsprofils in den jeweiligen Bahnverlauf gebracht werden, in dem es auch während des Applikationsvorganges in dem Anrollkopf über dessen jeweilige Rollen läuft. Indem dem Anfangsabschnitt des Dichtungsprofils dieser Bahnverlauf durch die Ausrichtvorrichtung aufgeprägt wird, kann der Anfangsabschnitt ohne Weitere in den Anrollkopf übergeben werden, so dass sich das Dichtungsprofil dort unmittelbar zwischen bzw. auf den Rollen befinden, über die es in einer Betriebssituation laufen soll. Die erfindungsgemäße Applikationseinheit basiert insbesondere auf dem Gedanken, dass ein seitliches Heranführen des Dichtungsprofils, welchem bereits der gekrümmte Bahnverlauf aufgeprägt ist, an den Anrollkopf zweckmäßig ist, da eine sichere Übernahme durch den Anrollkopf gewährleistet ist und eine Beschädigung des Dichtungsprofils vermieden wird. Eine vorteilhafte Ausgestaltung der Erfindung sieht vor, dass der erste Bahnverlauf des Anrollkopfes und der zweite Bahnverlauf der Ausrichtvorrichtung in der Ausrichtposition deckungsgleich zueinander angeordnet sind. Hierdurch ist eine besonders einfache und störungsunanfällige Übergabe des Dichtungsprofils von der Ausrichtvorrichtung an den Anrollkopf gewährleistet.

Eine vorteilhafte Ausgestaltung der Erfindung sieht vor, dass in dem Anrollkopf zwischen einer geöffneten und einer angenäherten Stellung zustellbare Umlenkrollen und/oder Führungsrollen angeordnet sind.

Eine vorteilhafte Ausgestaltung der Erfindung sieht vor, dass sich in der Übergabeposition die Ausrichtelemente der Ausrichtvorrichtung und die Umlenkrollen und/oder Führungsrollen des Anrollkopfes sich in Richtung der Bahnverläufe betrachtet hinterschneiden. Hierbei kann hinterschneiden auch als überlappen oder ineinandergreifen bezeichnet werden.

Eine vorteilhafte Ausgestaltung der Erfindung sieht vor, dass die Ausrichtvorrichtung einen Greiferschlitten aufweist, der zumindest linear in der Ebene des zweiten Bahnverlaufs der Ausrichtvorrichtung verfahrbar ist. Durch den Greiferschlitten ist es in vorteilhafter Weise möglich, die für die Übergabe an den Anrollkopf erforderliche Länge des Dichtungsprofils durch Herausziehen zu bevorraten.

Eine vorteilhafte Ausgestaltung der Erfindung sieht vor, dass der Greiferschlitten zwei Paar Greiferbacken aufweist. Hierdurch ist es möglich, über das erste Greiferbackenpaar das Gummiprofil und über das zweite Greiferbackenpaar den Abdeckliner des Dichtungsprofils getrennt voneinander zu greifen.

Eine vorteilhafte Ausgestaltung der Erfindung sieht vor, dass die Ausrichtelemente und/oder der Greiferschlitten über jeweilige Linearbewegungsaktuatoren gegenüber dem Grundrahmen der Ausrichtvorrichtung beweglich gehalten sind.

Eine vorteilhafte Ausgestaltung der Erfindung sieht vor, dass der erste Bahnverlauf des Anrollkopfes in zwei, bevorzugt etwas 90° zueinander stehenden, Ebenen verläuft. Hierbei ist in konkreter Ausgestaltung vorgesehen, dass die Ausrichtvorrichtung derart schwenkbar ist, dass der zweite Bahnverlauf in einer verschwenkten Stellung in zwei, bevorzugt etwas 90° zueinander stehenden, Ebenen verläuft.

Die Aufgabe wird ferner gelöst durch ein Verfahren zum automatisierten Einlegen eines Anfangsabschnitts eines Dichtungsprofils in eine Applikationseinheit, bei dem die Applikationseinheit mit einer Ausrichtvorrichtung und einem Anrollkopf bereitgestellt wird, wobei der Anrollkopf das Dichtungsprofil während einer Betriebssituation entlang eines gekrümmten ersten Bahnverlaufs führt, der Anfangsabschnitt des Dichtungsprofils in die Ausrichtvorrichtung eingezogen wird, dem Anfangsabschnitt des Dichtungsprofils über bewegliche Ausrichtelemente ein zweiter gekrümmter Verlauf aufgeprägt wird, wobei der zweite Bahnverlauf des Anfangsabschnitts dem ersten Bahnverlauf des Dichtungsprofils in dem Anrollkopf während der Betriebssituation entspricht und der Anfangsabschnitt des Dichtungsprofils aus der Ausrichtvorrichtung in den Anrollkopf unter Beibehaltung des durch die Ausrichtelemente aufgeprägten zweiten Bahnverlaufs übergeben wird. Eine vorteilhafte Ausgestaltung des Verfahrens sieht vor, dass während des Einziehens des Anfangsabschnitts des Dichtungsprofils in die Ausrichtvorrichtung ein Abdeckliner und ein Dichtungsgummi des Dichtungsprofils getrennt voneinander gegriffen werden.

Eine vorteilhafte Ausgestaltung des Verfahrens sieht vor, dass das Einziehen des Anfangsabschnitts des Dichtungsprofils ein Wegschwenken des Abdeckliners von dem Dichtungsgummi des Dichtungsprofils umfasst.

Eine vorteilhafte Ausgestaltung des Verfahrens sieht vor, dass in dem Anrollkopf angeordnete Umlenkrollen und/oder Führungsrollen zur Übernahme des Anfangsabschnitts des Dichtungsprofils von der Ausrichtvorrichtung in eine geöffnete Stellung verfahren werden.

Eine vorteilhafte Ausgestaltung des Verfahrens sieht vor, dass der Anfangsabschnitt des Dichtungsprofils nach der Übergabe in den ersten Bahnverlauf des Anrollkopfes endseitig beschnitten wird.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figuren 1a), 1b): eine erfindungsgemäße Applikationseinheit in einer seitlichen Ansicht und einer Draufsicht;
- Figuren 2a), 2b): eine Ausrichtvorrichtung der Applikationseinheit gemäß Figur 1 während des automatisierten Einfädelns eines Dichtungsprofils;
- Figuren 3a), 3b): die Ausrichtvorrichtung der Applikationseinheit gemäß Figur 1 während des automatisierten Einfädelns eines Dichtungsprofils in einer weiteren Position;
- Figuren 4a), 4b): die Ausrichtvorrichtung der Applikationseinheit gemäß Figur 1 während des automatisierten Einfädelns eines Dichtungsprofils in einer weiteren Position;
- Figuren 5a), 5b): die Ausrichtvorrichtung der Applikationseinheit gemäß Figur 1 während des automatisierten Einfädelns eines Dichtungsprofils in einer weiteren Position;
- Figur 6: die Applikationseinheit gemäß Figur 1b) während des automatisierten Einfädelns eines Dichtungsprofils in einer weiteren Position;
- Figur 7: die Applikationseinheit gemäß Figur 1a) während des automatisierten Einfädelns eines Dichtungsprofils in einer weiteren Position;
- Figur 8: ein Anrollkopf der Applikationseinheit gemäß Figur 1a) während des automatisierten Einfädelns eines Dichtungsprofils in einer weiteren Position und
- Figur 9: eine weitere Ausgestaltung einer Applikationseinheit mit einem um 90° abgewinkelten Anrollkopf.

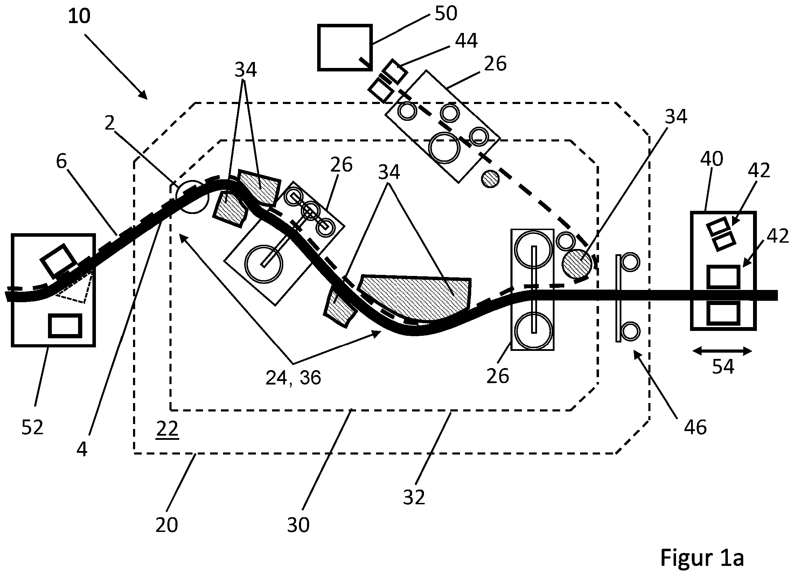

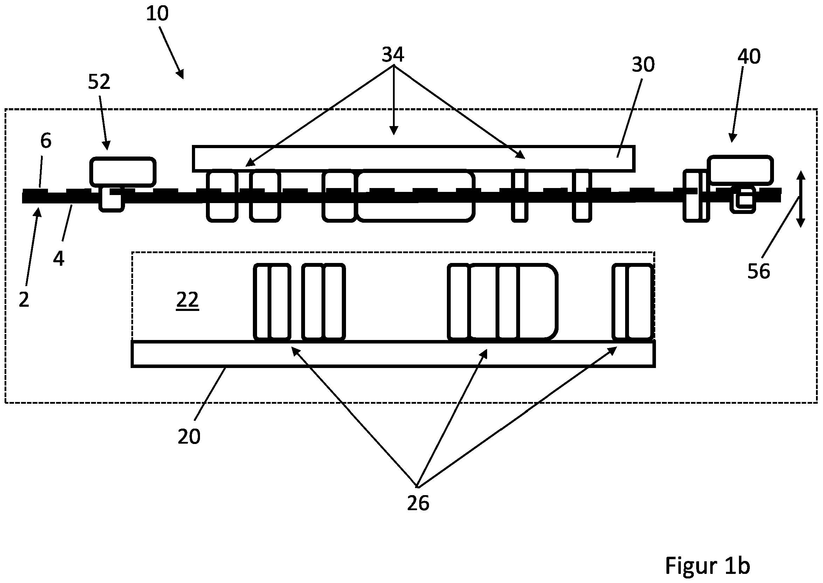

Die Figuren 1a) und 1b) zeigen eine Ausführungsform einer erfindungsgemäßen Applikationseinheit 10, in einer seitlichen Ansicht (Figur 1a) und einer Draufsicht (Figur 1b). Die Figuren 1a) und 1b) werden zunächst gemeinsam beschrieben, wobei die Applikationseinheit 10 bezüglich ihres strukturellen Aufbaus beschrieben wird und anhand weiterer Figuren die unterschiedlichen Positionen der Applikationseinheit 10 während eines automatisierten Einlegens eines Anfangsabschnitts eines Dichtungsprofils 2 beschrieben wird.

Die Applikationseinheit 10 umfasst zunächst als wesentliche Strukturbauteile einen Anrollkopf 20 und eine Ausrichtvorrichtung 30. In einem Inneren 22 des Anrollkopfes 20 sind eine Mehrzahl Umlenk- bzw. Förderrollen 26 angeordnet. Über diese Umlenk- bzw. Förderrollen 26 läuft das Dichtungsprofil 2 während einer späteren Betriebssituation bzw. wird von den Rollen 26 gefördert. Hierbei nimmt das Dichtungsprofil 2 von seinem Eintritt in das Innere 22 des Anrollkopfes 20 bis zu seinem Austritt einen mehrfach gekrümmten ersten Bahnverlauf 24 ein. Zweckmäßigerweise kann vorgesehen sein, dass die Umlenk- bzw. Förderrollen 26 eine geöffnete Position, in der sie von dem Bahnverlauf 24 beabstandet stehen, und eine zugestellte Position, in der sie unmittelbar an dem Bahnverlauf 24 und dem Dichtungsprofil 2 anliegen, einnehmen können. Die Figur 1a) zeigt eine zugestellte Position der Rollen 26. Für diese Zustellbewegung kann in geeigneter Weise eine Linearverstellung vorgesehen sein. Die Ausrichtvorrichtung 30 weist eine Mehrzahl an Ausrichtelementen 34 auf. Diese Ausrichtelemente 34 sind ebenfalls zwischen einer geöffneten Position und einer zugestellten Position verfahrbar, wobei auch hier in geeigneter Weise eine Linearverstellung vorgesehen sein kann. Die Figur 1a) zeigt eine zugestellte Position der Ausrichtelemente 34. Die Ausrichtelemente 34 sind in ihrer zugestellten Position derart angeordnet, dass ein zwischen ihnen hindurchgeführtes Dichtungsprofil 2 einen zweiten Bahnverlauf 36 ausbildet, wobei dieser zweite Bahnverlauf 36 bezüglich seiner Krümmungen weitestgehend genau dem ersten Bahnverlauf 24 entspricht, in dem das Dichtungsprofil 2 in einer Betriebssituation im Anrollkopf 20 verläuft. Die weitestgehende Übereinstimmung des ersten und des zweiten Bahnverlaufs 24, 36 ist die Voraussetzung dafür, dass das Dichtungsprofil 2 von der Ausrichtvorrichtung 30 an bzw. in den Anrollkopf 20 übergeben werden kann.

Die Ausrichtvorrichtung 30 weist zudem bevorzugt einen Greiferschlitten 40 auf, der zwei Greiferbackenpaare 42 umfasst, über die ein Profilgummi 4 und ein Abdeckliner 6 des Dichtungsprofils getrennt voneinander gegriffen bzw. fixiert werden können, wie im weiteren Verlauf noch beschrieben wird. Der Greiferschlitten 40 ist in horizontaler Richtung linear verfahrbar, was über den Pfeil 54 symbolisiert ist. Über diese horizontale Verfahrbarkeit des Greiferschlittens 40, kann das Dichtungsprofil über den Greiferschlitten 40, vorliegend von links nach rechts, aus einem nicht dargestellten Dichtungsprofilmagazin entlang der Ausrichtelemente 34 bzw. zwischen den geöffneten Ausrichtelementen 34 hindurch gezogen werden. Als Teil des Dichtungsprofilmagazins ist mit dem Bezugszeichen 52 eine Ladungsträgerfixierung gezeigt, über die das freie Ende des im Übrigen im Magazin bevorrateten Dichtungsprofils fixiert und aus dieser Fixierung von dem Greiferschlitten 40 übernommen werden kann.

In der in Figur 1b) gezeigten Draufsicht der Applikationseinheit 10 ist mit dem Bezugszeichen 56 eine Bewegung der Ausrichtvorrichtung 30 symbolisiert, mit der diese zwischen einer Ausrichtposition und einer Übergabeposition bezüglich des Anrollkopfes 20 beweglich ist. In der Ausrichtposition sind Ausrichtvorrichtung 30 und Anrollkopf 20 beabstandet zueinander und in der Übergabeposition einander zumindest angenähert angeordnet, was im weiteren Verlauf noch dargestellt wird. Die Figur 1b) zeigt die Ausrichtvorrichtung 30 und Anrollkopf 20 in einer Ausrichtposition zueinander.

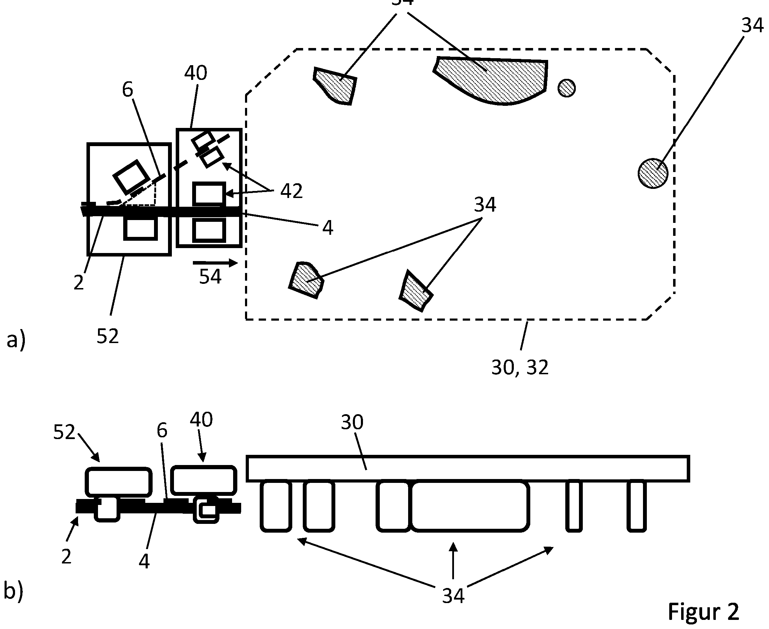

Die Figuren 2a) und 2b) werden im Folgenden gemeinsam beschrieben. Sie zeigen die Ausrichtvorrichtung 30, entsprechend den Figuren 1a) und 1b), in einer seitlichen Ansicht und einer Draufsicht. Nicht gezeigt ist der Anrollkopf 20. Dargestellt ist eine Ausgangsituation eines automatisierten Einlegens eines Anfangsabschnitts eines Dichtungsprofils 2 in eine Applikationseinheit 10. Der Anfangsabschnitt des Dichtungsprofils 2 ist bereits von der Ladungsträgerfixierung 52 freigegeben, und zwar derart, dass das Profilgummi 4 und der Abdeckliner 6 voneinander getrennt sind. Das Profilgummi 4 und der Abdeckliner 6 sind getrennt voneinander jeweils in den Greiferbackenpaaren 42 des Greiferschlittens 40 fixiert. Der Greiferschlitten 40 befinden sich, verglichen mit den Figuren 1a) und 1b), in einer Ausgangsposition zwischen Ladungsträgerfixierung 52 und Ausrichtvorrichtung 30. Die Ausrichtelemente 34 befinden sich in der geöffneten Stellung, so dass sie sich im Wesentlichen im Bereich eines oberen bzw. unteren Randes der Grundplatte 32 der Ausrichtvorrichtung 30 befinden. Für einzelne Ausrichtelemente 34 kann auch vorgesehen sein, dass diese zur Einnahme einer geöffneten Stellung in der Grundplatte 32 versenkt werden. Während zunächst noch die Ladungsträgerfixierung 52 das Profilgummi 4 und des Abdeckliner 6 ebenfalls fixiert, wird diese Fixierung im Verlauf freigegeben, so dass das Dichtungsprofil von der Magazinrolle, welche nicht dargestellt ist, abgerollt werden kann. Mit dem Pfeil 54 ist die Bewegungsrichtung des Greiferschlittens 40 symbolisiert.

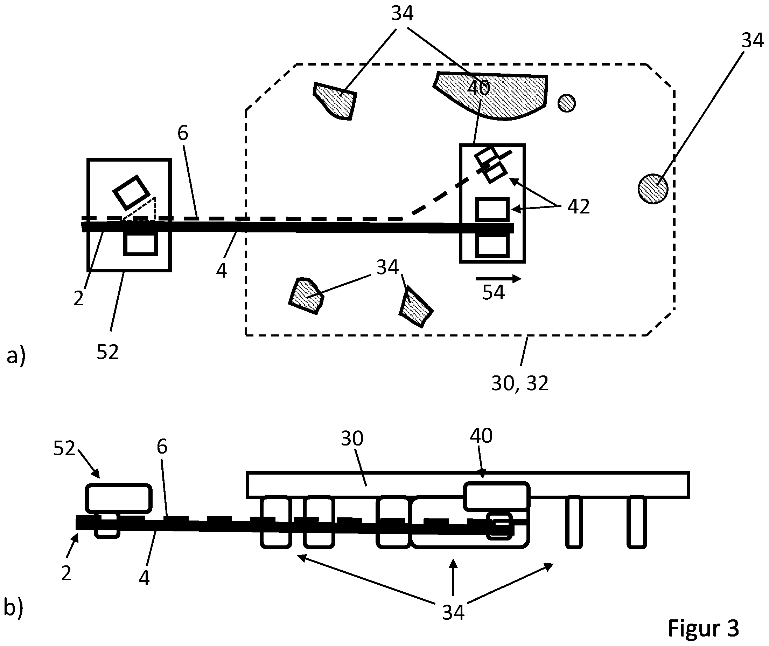

Die Figuren 3a) und 3b) zeigen zur Verdeutlichung eine Zwischenposition, in der das Dichtungsprofil 2 über den Greiferschlitten 40 bereits eine gewisse Strecke entlang der Ausrichtvorrichtung 30 gezogen wurde. Die Länge des bereits gezogenen Dichtungsprofils wurde von der Magazinrolle, nicht dargestellt, abgewickelt.

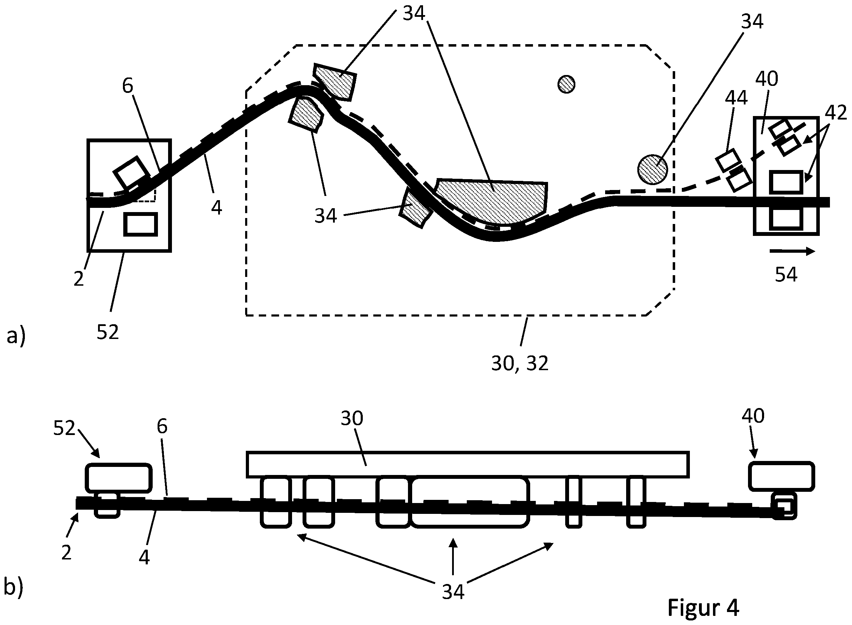

Die Figuren 4a) und 4b) zeigen eine weitere Zwischenposition, in der das Dichtungsprofil 2 über den Greiferschlitten 40 eine weitere Strecke entlang der Ausrichtvorrichtung 30 gezogen wurde, so dass die Greiferschlitten 40 sich nun an der zu der Ladungsträgerfixierung 52 entgegengesetzte Seite der Ausrichtvorrichtung 30 befinden. Das Profilgummi 4 und der Abdeckliner 6 haben weiterhin eine unveränderte Position zueinander und werden von den Greiferbackenpaaren 42 des Greiferschlittens 40 fixiert. Außerdem sind die Ausrichtelemente 34 in ihre zugestellte Position verfahren worden, so dass das Dichtungsprofil 2 nun in Teilen bereits den zweiten Bahnverlauf 36 eingenommen hat. Zusätzlich ist das Greiferelement 44 für den Linerabzug in Position gebracht worden, so dass der Abdeckliner 4 weiter vom Profilgummi 4 abgezogen werden kann, wie anhand der nachfolgenden Figuren erläutert wird.

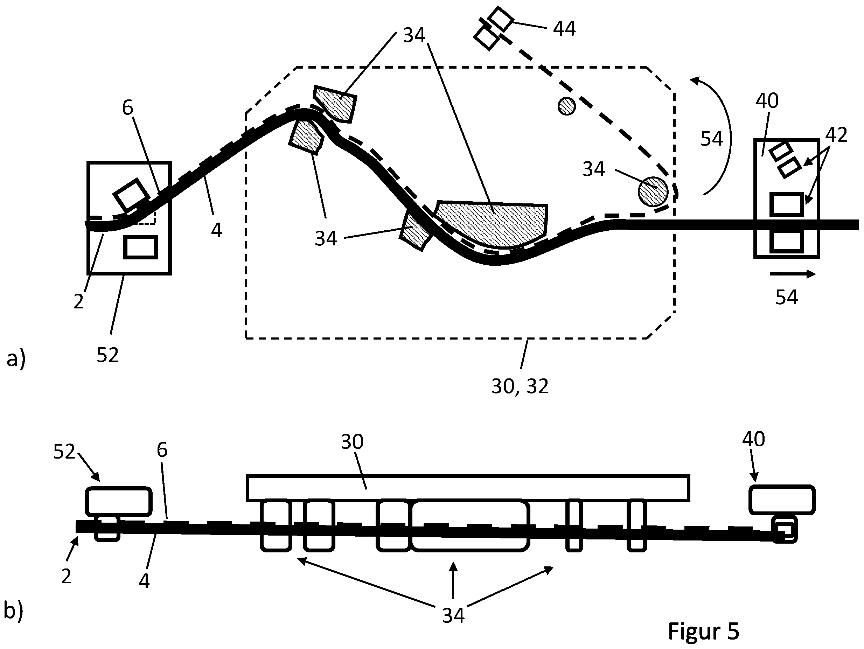

Die Figuren 5a) und 5b) zeigen die Position, in der der Abdeckliner 6 über das Greiferelement 44 über eine Schwenkbewegung weiter abgezogen wurde. Die Schwenkbewegung ist durch den Pfeil 58 symbolisiert. In dieser Position hat das Dichtungsprofil 2 den zweiten Bahnverlauf 36 angenommen, der für die Übergabe in den ersten Bahnverlauf 24 des Anrollkopfs 20 erforderlich ist. Strenggenommen könnten die Bahnverläufe 24, 36 als jeweils zweigeteilt beschrieben werden, da der Abdeckliner zunächst einen gemeinsamen Verlauf mit dem Profilgummi 4 hat, dann aber nach Verschwenken einen getrennten Verlauf von dem Profilgummi 4 nimmt. Die in den Figuren 5a) und 5b) gezeigte Position entspricht im Wesentlichen der Position, wie sie bereits in den Figuren 1a) und 1b) dargestellt wurde. Dies bedeutet, dass dem Dichtungsprofil 2 der Bahnverlauf 36 aufgeprägt ist, der Anrollkopf 20 und die Ausrichtvorrichtung 30 sich in der beabstandeten Position zueinander befinden - siehe Figur 1b) - und die Umlenk- bzw. Förderrollen 26 des Anrollkopfes 20 sich in der geöffneten Position befinden.

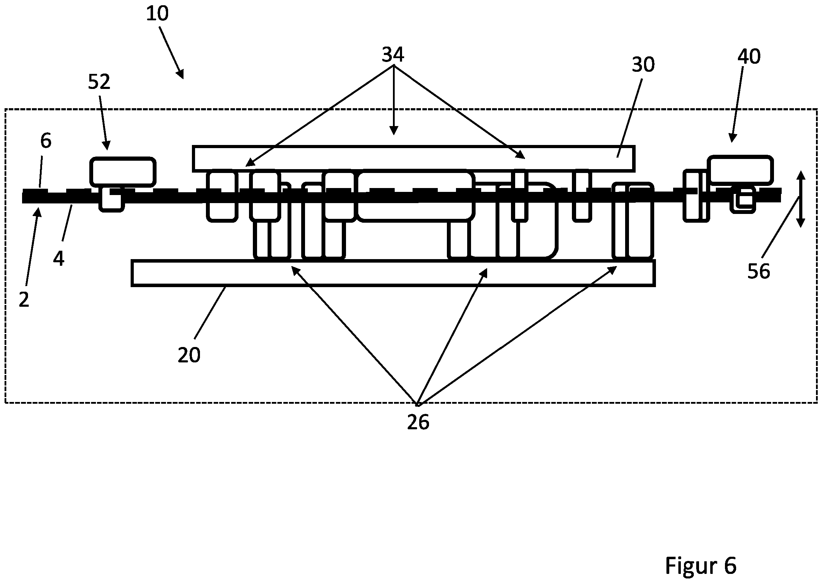

Die Figur 6 zeigt den Anrollkopf 20 und die Ausrichtvorrichtung 30 in Draufsicht, und zwar bereits ein einer angenäherten Position zur Übergabe des Dichtungsprofils 2 von der Ausrichtvorrichtung 30 zu dem Anrollkopf 20. Hierfür befinden sich die Umlenk- bzw. Förderrollen 26 zunächst in der geöffneten Stellung, wie dies in der Figur 1a) dargestellt ist.

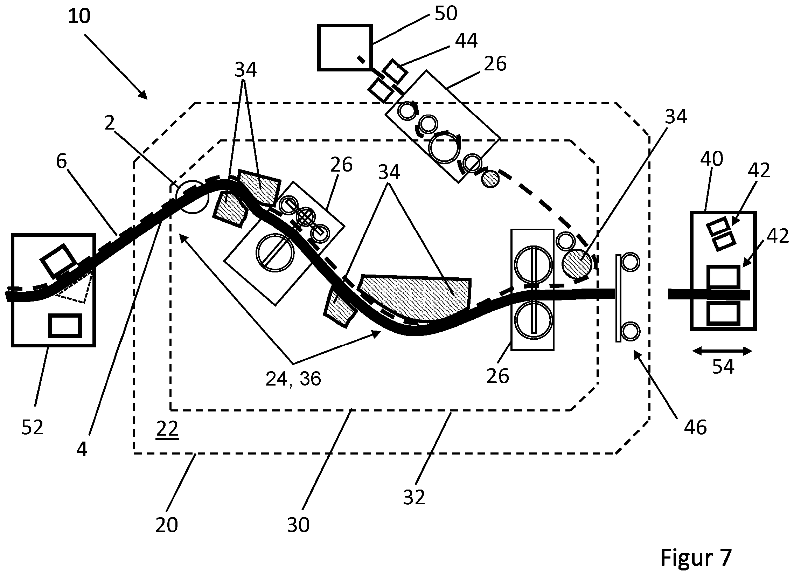

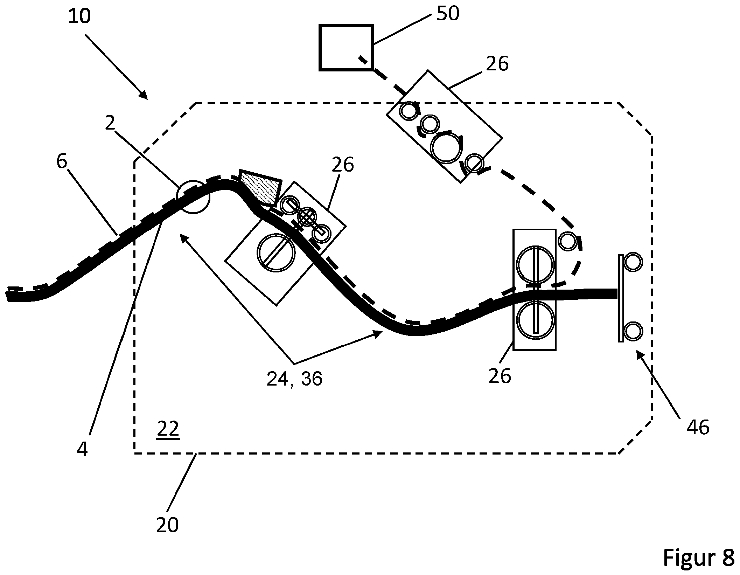

Die Figur 7 zeigt den Zustand, in dem die Umlenk- bzw. Förderrollen 26 zugestellt wurde, um nachfolgend das Dichtungsprofil 2 in dem Bahnverlauf 24 zu übernehmen. Zudem wurde über die Schneidevorrichtung 46 das durchgezogen Dichtungsprofil 2 endseitig beschnitten. Auf eine Darstellung einer Draufsicht kann verzichtet werden. In einem nächsten Schritt werden die Ausrichtelemente 32 wieder in ihre geöffnete Position verfahren, was der Position der Figuren 2 und 3 entspricht, so dass sich die in der Figur 8 gezeigte Darstellung des Anrollkopfes 20 mit dem Dichtungsprofil 2 ergibt, welches entlang des ersten Bahnverlaufs 24 geführt ist.

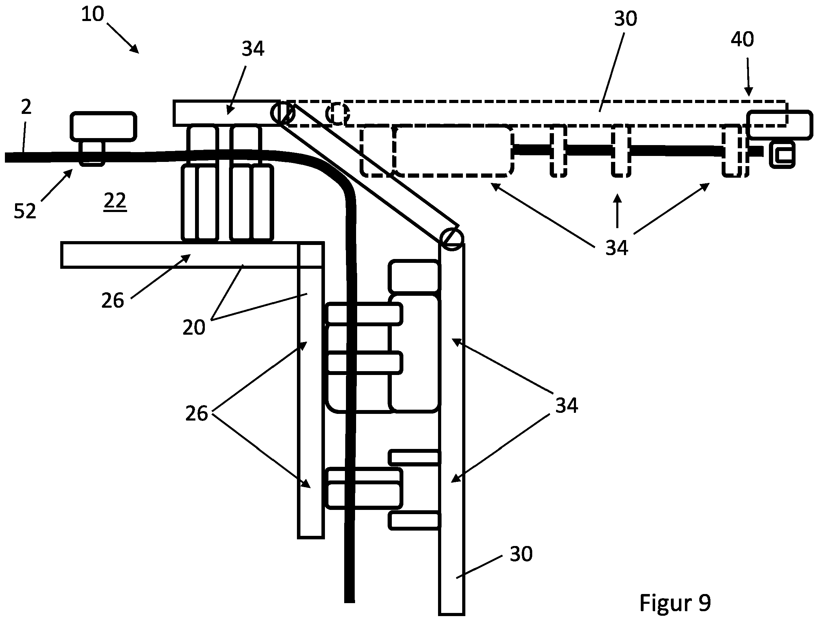

Die Figur 9 zeigt eine alternative Ausgestaltung der Applikationseinheit 10, bei der der Anrollkopf 20 strukturell unter einem Winkel von 90° ausgeführt ist, so dass die Ausrichtvorrichtung 30 nach dem Durchführen des Dichtungsprofils 2 dieses unter 90° anklappt, um eine Übergabe an den Anrollkopf 20 zu ermöglichen. Dargestellt ist der Anrollkopf 20 und die Ausrichtvorrichtung 30 lediglich in einer Draufsicht.

### Bezugszeichenliste

- 2: Dichtungsprofil
- 4: Profilgummi
- 6: Abdeckliner
- 10: Applikationseinheit
- 20: Anrollkopf
- 22: Innere des Anrollkopfs
- 24: erster Bahnverlauf
- 26: Umlenk- bzw. Förderrollen
- 30: Ausrichtvorrichtung
- 32: Grundrahmen
- 34: Ausrichtelement
- 36: zweiter Bahnverlauf
- 40: Greiferschlitten
- 42: Greiferbackenpaar
- 44: Greiferelement für Liner
- 46: Schneidevorrichtung
- 50: Absaugvorrichtung
- 52: Ladungsträgerfixierung
- 54: Bewegung
- 56: Bewegung
- 58: Schwenkbewegung

## Patentansprüche

1. Applikationseinheit (10) zum Anbringen eines Dichtungsprofils (2) auf ein dem Verschließen einer Karosserieöffnung dienenden Karosseriebauteil, umfassend
einen Anrollkopf (20), wobei in einem Inneren (22) des Anrollkopfes (20) während einer Betriebssituation das Dichtungsprofil (2) entlang eines gekrümmten ersten Bahnverlaufs (24) geführt wird, und
eine Ausrichtvorrichtung (30) mit einer Mehrzahl an Ausrichtelementen (34), die zwischen einer geöffneten Stellung und einer angenäherten Stellung auf einem Grundrahmen (32) der Ausrichtvorrichtung (30) beweglich sind, **dadurch gekennzeichnet, dass** ein zwischen den Ausrichtelementen (34) in der angenäherten Stellung geführtes Dichtungsprofil (2) einen dem ersten Bahnverlauf (24) während einer Betriebssituation des Anrollkopfes entsprechenden zweiten Bahnverlauf (36) einnimmt,
wobei der Anrollkopf (20) und/oder die Ausrichtvorrichtung (30) zueinander zwischen einer Ausgangsposition und einer Übergabeposition beweglich sind und der Anrollkopf (20) und die Ausrichtvorrichtung (30) in der Ausgangsposition beabstandet zueinander und in der Übergabeposition einander zumindest angenähert angeordnet sind.

2. Applikationseinheit (10) nach Anspruch 1, **dadurch gekennzeichnet, dass** der erste Bahnverlauf (24) des Anrollkopfes (20) und der zweite Bahnverlauf (36) der Ausrichtvorrichtung (30) in der Übergabeposition deckungsgleich zueinander angeordnet sind.

3. Applikationseinheit (10) nach Anspruch 1 oder 2, **dadurch gekennzeichnet, dass** in dem Anrollkopf (20) zwischen einer geöffneten und einer angenäherten Stellung zustellbare Umlenkrollen und/oder Führungsrollen (26) angeordnet sind.

4. Applikationseinheit (10) nach Anspruch 3, **dadurch gekennzeichnet, dass** sich in der Übergabeposition die Ausrichtelemente (34) der Ausrichtvorrichtung (30) und die Umlenkrollen und/oder Führungsrollen (26) des Anrollkopfes (20) sich in Richtung der Bahnverläufe (24, 36) betrachtet hinterschneiden.

5. Applikationseinheit (10) nach einem der Ansprüche 1 bis 4, **dadurch gekennzeichnet, dass** die Ausrichtvorrichtung (30) einen Greiferschlitten (40) aufweist, der zumindest linear in einer Ebene des zweiten Bahnverlaufs (36) der Ausrichtvorrichtung (30) verfahrbar ist.

6. Applikationseinheit (10) nach Anspruch 5, **dadurch gekennzeichnet, dass** der Greiferschlitten (40) zwei Paar Greiferbacken (42₁, 42₂) aufweist.

7. Applikationseinheit (10) nach einem der Ansprüche 1 bis 6, **dadurch gekennzeichnet, dass** die Ausrichtelemente (34) und/oder der Greiferschlitten (40) über jeweilige Linearbewegungsaktuatoren (50) gegenüber dem Grundrahmen (32) der Ausrichtvorrichtung (30) beweglich geführt sind.

8. Applikationseinheit (10) nach einem der Ansprüche 1 bis 7, **dadurch gekennzeichnet, dass** der erste Bahnverlauf (24) des Anrollkopfes (20) in zwei, bevorzugt etwa 90° zueinander stehenden, Ebenen verläuft.

9. Applikationseinheit (10) nach Anspruch 8, **dadurch gekennzeichnet, dass** die Ausrichtvorrichtung (30) derart schwenkbar ist, dass der zweite Bahnverlauf (36) in einer verschwenkten Stellung in zwei, bevorzugt etwa 90° zueinander stehenden, Ebenen verläuft.

10. Verfahren zum automatisierten Einlegen eines Anfangsabschnitts eines Dichtungsprofils (2) in eine Applikationseinheit (10), bei dem
die Applikationseinheit (10) mit einer Ausrichtvorrichtung (30) und einem Anrollkopf (20) bereitgestellt wird, wobei der Anrollkopf (20) das Dichtungsprofil (2) während einer Betriebssituation entlang eines gekrümmten ersten Bahnverlaufs (24) führt, und wobei der Anfangsabschnitt des Dichtungsprofils (2) in die Ausrichtvorrichtung (30) eingezogen wird, **gekennzeichnet durch** die Schritte:
- dem Anfangsabschnitt des Dichtungsprofils (32) über bewegliche Ausrichtelemente (34) ein zweiter gekrümmter Bahnverlauf (36) aufgeprägt wird, wobei der zweite Bahnverlauf (36) des Anfangsabschnitts dem ersten Bahnverlauf (24) des Dichtungsprofils (2) in dem Anrollkopf (20) während der Betriebssituation entspricht und
- der Anfangsabschnitt des Dichtungsprofils (2) aus der Ausrichtvorrichtung (30) in den Anrollkopf (20) unter Beibehaltung des durch die Ausrichtelemente (34) aufgeprägten zweiten Bahnverlaufs (36) übergeben wird.

11. Verfahren nach Anspruch 10, bei dem während des Einziehens des Anfangsabschnitts des Dichtungsprofils (2) in die Ausrichtvorrichtung (10) ein Abdeckliner (6) und ein Profilgummi (4) des Dichtungsprofils (2) getrennt voneinander gegriffen werden.

12. Verfahren nach Anspruch 10 oder 11, bei dem das Einziehen des Anfangsabschnitts des Dichtungsprofils (2) ein Wegschwenken des Abdeckliners (6) von dem Profilgummi (4) des Dichtungsprofils (2) umfasst.

13. Verfahren nach einem der Ansprüche 10 bis 12, bei dem in dem Anrollkopf (20) angeordnete Umlenkrollen und/oder Führungsrollen (26) zur Übernahme des Anfangsabschnitts des Dichtungsprofils (2) von der Ausrichtvorrichtung (30) in eine geöffnete Stellung verfahren werden.

14. Verfahren nach einem der Ansprüche 10 bis 13, bei dem der Anfangsabschnitt des Dichtungsprofils (2) nach der Übergabe in den ersten Bahnverlauf (24) des Anrollkopfes (20) endseitig beschnitten wird.

## Claims

1. Application unit (10) for applying a sealing profile (2) to a body component serving to close a body opening, comprising
a rolling head (20), wherein the sealing profile (2) is guided along a curved first path (24) in an interior (22) of the rolling head (20) during an operating situation, and
an alignment device (30) with a plurality of alignment elements (34) which are movable between an open position and an approximated position on a base frame (32) of the alignment device (30), **characterized in that** a sealing profile (2) guided between the alignment elements (34) in the approximated position assumes a second path (36) corresponding to the first path (24) during an operating situation of the rolling head,
wherein the rolling head (20) and/or the alignment device (30) are movable relative to one another between a starting position and a transfer position and the rolling head (20) and the alignment device (30) are arranged at a distance from one another in the starting position and at least approximately to one another in the transfer position.

2. Application unit (10) according to claim 1, **characterized in that** the first path (24) of the rolling head (20) and the second path (36) of the alignment device (30) are arranged congruently to one another in the transfer position.

3. Application unit (10) according to claim 1 or 2, **characterized in that** deflection rollers and/or guide rollers (26) which can be adjusted between an open position and an approximated position are arranged in the rolling head (20).

4. Application unit (10) according to claim 3, **characterized in that**, in the transfer position, the alignment elements (34) of the alignment device (30) and the deflection rollers and/or guide rollers (26) of the rolling head (20) intersect each other as viewed in the direction of the paths (24, 36).

5. Application unit (10) according to one of claims 1 to 4, **characterized in that** the alignment device (30) has a gripper carriage (40) which can be moved at least linearly in a plane of the second path (36) of the alignment device (30).

6. Application unit (10) according to claim 5, **characterized in that** the gripper carriage (40) has two pairs of gripper jaws (42₁, 42₂).

7. Application unit (10) according to one of claims 1 to 6, **characterized in that** the alignment elements (34) and/or the gripper carriage (40) are guided movably relative to the base frame (32) of the alignment device (30) via respective linear motion actuators (50).

8. Application unit (10) according to one of claims 1 to 7, **characterized in that** the first path (24) of the rolling head (20) runs in two planes, preferably at approximately 90° to each other.

9. Application unit (10) according to claim 8, **characterized in that** the alignment device (30) is pivotable in such a way that the second path (36), in a pivoted position, runs in two planes, preferably at approximately 90° to one another.

10. Method for the automated insertion of an initial section of a sealing profile (2) into an application unit (10), in which
the application unit (10) is provided with an alignment device (30) and a rolling head (20), wherein the rolling head (20) guides the sealing profile (2) along a curved first path (24) during an operating situation, and wherein the initial portion of the sealing profile (2) is drawn into the alignment device (30), **characterized by** the steps of:
- a second curved path (36) is applied on the initial section of the sealing profile (32) via movable alignment elements (34), the second path (36) of the initial section corresponding to the first path (24) of the sealing profile (2) in the rolling head (20) during the operating situation, and
- the initial section of the sealing profile (2) is transferred from the alignment device (30) into the rolling head (20) while maintaining the second path (36) applied by the alignment elements (34).

11. Method according to claim 10, in which a cover liner (6) and a profile rubber (4) of the sealing profile (2) are gripped separately from one another during the drawing-in of the initial section of the sealing profile (2) into the alignment device (10).

12. Method according to claim 10 or 11, in which the retraction of the initial section of the sealing profile (2) comprises pivoting the cover liner (6) away from the profile rubber (4) of the sealing profile (2).

13. Method according to one of claims 10 to 12, in which deflection rollers and/or guide rollers (26) arranged in the rolling head (20) are moved into an open position by the alignment device (30) in order to take over the initial section of the sealing profile (2).

14. Method according to one of claims 10 to 13, in which the initial section of the sealing profile (2) is trimmed at the end after transfer to the first path (24) of the rolling head (20).

## Revendications

1. Unité d'application (10) pour appliquer un profilé d'étanchéité (2) sur un élément de carrosserie servant à fermer une ouverture de carrosserie, comprenant
une tête de roulage (20), dans laquelle, à l'intérieur (22) de la tête de roulage (20), pendant une situation de fonctionnement, le profilé d'étanchéité (2) est guidé le long d'une première trajectoire incurvée (24), et
un dispositif d'alignement (30) avec une pluralité d'éléments d'alignement (34) qui sont mobiles entre une position ouverte et une position approchée sur un cadre de base (32) du dispositif d'alignement (30), **caractérisé en ce qu'**un profilé d'étanchéité (2) guidé entre les éléments d'alignement (34) dans la position approchée adopte une deuxième trajectoire (36) correspondant à la première trajectoire (24) pendant une situation de fonctionnement de la tête de roulage,
la tête de roulage (20) et/ou le dispositif d'alignement (30) étant mobiles l'un par rapport à l'autre entre une position de départ et une position de transfert, et la tête de roulage (20) et le dispositif d'alignement (30) étant disposés à distance l'un de l'autre dans la position de départ et au moins à proximité l'un de l'autre dans la position de transfert.

2. Unité d'application (10) selon la revendication 1, **caractérisée en ce que** la première trajectoire (24) de la tête de roulage (20) et la deuxième trajectoire (36) du dispositif d'alignement (30) sont disposées de manière à coïncider l'une avec l'autre dans la position de transfert.

3. Unité d'application (10) selon la revendication 1 ou 2, **caractérisée en ce que** des rouleaux de renvoi et/ou des rouleaux de guidage (26) réglables entre une position ouverte et une position approchée sont disposés dans la tête de roulage (20).

4. Unité d'application (10) selon la revendication 3, **caractérisée en ce que**, dans la position de transfert, les éléments d'alignement (34) du dispositif d'alignement (30) et les galets de renvoi et/ou les galets de guidage (26) de la tête de roulage (20) se contre-découpent, vus dans la direction des trajectoires (24, 36).

5. Unité d'application (10) selon l'une des revendications 1 à 4, **caractérisée en ce que** le dispositif d'alignement (30) présente un chariot de préhension (40) qui peut être déplacé au moins linéairement dans un plan de la deuxième trajectoire (36) du dispositif d'alignement (30).

6. Unité d'application (10) selon la revendication 5, **caractérisée en ce que** le chariot de préhension (40) présente deux paires de mâchoires de préhension (42₁, 42₂).

7. Unité d'application (10) selon l'une des revendications 1 à 6, **caractérisée en ce que** les éléments d'alignement (34) et/ou le chariot de préhension (40) sont guidés de manière mobile par rapport au cadre de base (32) du dispositif d'alignement (30) par l'intermédiaire d'actionneurs de mouvement linéaire respectifs (50).

8. Unité d'application (10) selon l'une des revendications 1 à 7, **caractérisée en ce que** la première trajectoire (24) de la tête de roulage (20) s'étend dans deux plans, de préférence à environ 90° l'un de l'autre.

9. Unité d'application (10) selon la revendication 8, **caractérisée en ce que** le dispositif d'alignement (30) peut pivoter de telle sorte que la deuxième trajectoire (36) s'étend dans deux plans, de préférence à environ 90° l'un de l'autre, dans une position pivotée.

10. Procédé de mise en place automatisée d'une partie initiale d'un profilé d'étanchéité (2) dans une unité d'application (10), dans lequel
l'unité d'application (10) est fournie avec un dispositif d'alignement (30) et une tête de roulage (20), dans lequel la tête de roulage (20) guide le profilé d'étanchéité (2) le long d'une première trajectoire incurvée (24) pendant une situation de fonctionnement, et dans lequel la partie initiale du profilé d'étanchéité (2) est rétractée dans le dispositif d'alignement (30), **caractérisé par** les étapes consistant à :
- une deuxième trajectoire incurvée (36) est imprimée à la section initiale du profilé d'étanchéité (32) par l'intermédiaire d'éléments d'alignement mobiles (34), la deuxième trajectoire (36) de la section initiale correspondant à la première trajectoire (24) du profilé d'étanchéité (2) dans la tête de roulage (20) pendant la situation de fonctionnement et
- la section initiale du profilé d'étanchéité (2) est transférée du dispositif d'alignement (30) dans la tête de roulage (20) en conservant la deuxième trajectoire (36) imprimée par les éléments d'alignement (34).

11. Procédé selon la revendication 10, dans lequel, pendant l'insertion de la partie initiale du profilé d'étanchéité (2) dans le dispositif d'alignement (10), une doublure de recouvrement (6) et un caoutchouc de profilé (4) du profilé d'étanchéité (2) sont saisis séparément.

12. Procédé selon la revendication 10 ou 11, dans lequel la rétraction de la partie initiale du profilé d'étanchéité (2) comprend un pivotement de l'élément de recouvrement (6) à l'écart du caoutchouc profilé (4) du profilé d'étanchéité (2).

13. Procédé selon l'une quelconque des revendications 10 à 12, dans lequel des galets de renvoi et/ou des galets de guidage (26) disposés dans la tête de roulage (20) sont déplacés dans une position ouverte par le dispositif d'alignement (30) pour prendre en charge la partie initiale du profilé d'étanchéité (2).

14. Procédé selon l'une quelconque des revendications 10 à 13, dans lequel la portion initiale du profilé d'étanchéité (2) est coupée à son extrémité après son transfert dans la première trajectoire (24) de la tête de roulage (20).
